Europäisches Patentamt

European Patent Office

Office européen des brevets

(19)

(11) Veröffentlichungsnummer: **0 157 106**
**B1**

(12) **EUROPÄISCHE PATENTSCHRIFT**

(45) Veröffentlichungstag der Patentschrift:
03.05.89

(21) Anmeldenummer: 85101050.4

(22) Anmeldetag: 01.02.85

(51) Int. Cl.⁴: **C 08 F 210/02** // (C08F210/02,
220:12, 220:04, 222:02)

┌─────────────────┐
│  E R R A T U M  │
└─────────────────┘

(SEITE, SPALTE, ZEILE)
(PAGE, COLUMN, LINE)
(PAGE, COLONNE, LIGNE)

| DIE TEXTSTELLE :<br>TEXT PUBLISHED :<br>LE PASSAGE SUIVANT : | | | | LAUTET BERICHTIGT:<br>SHOULD READ :<br>DEVRAIT ETRE LU : |
|---|---|---|---|---|
| nach ISO/DIS 534, lag bei | 4 | 6 | 17 | nach ISO/DIS 537, lag bei |

| Tag der Entscheidung<br>über die Berichtigung<br>Date of decision on<br>rectification:<br>Date de décision portant<br>sur modification: | ) 28.07.89 | Ausgabe- und Ver-<br>öffentlichungstag:<br>Issue and publication<br>date:<br>Date d'edition et de<br>publication: | ) 02.11.89 | Patbl.Nr.)<br><br>EPB no:) 89/44<br><br>Bull. no:) |

## Europäisches Patentamt

## European Patent Office

## Office européen des brevets

(11) Veröffentlichungsnummer: **0 157 106**
**B1**

(12) # EUROPÄISCHE PATENTSCHRIFT

(45) Veröffentlichungstag der Patentschrift:
03.05.89

(51) Int. Cl.⁴: **C 08 F 210/02** // (C08F210/02,
220:12, 220:04, 222:02)

(21) Anmeldenummer: **85101050.4**

(22) Anmeldetag: **01.02.85**

(54) Copolymerisate des Ethylens mit carboxylgruppenhaltigen Comonomeren.

(30) Priorität: **10.02.84 DE 3404744**

(43) Veröffentlichungstag der Anmeldung:
**09.10.85 Patentblatt 85/41**

(45) Bekanntmachung des Hinweises auf die Patenterteilung:
**03.05.89 Patentblatt 89/18**

(84) Benannte Vertragsstaaten:
**AT BE DE FR GB NL**

(56) Entgegenhaltungen:
**EP-A- 0 061 038**
**DE-A- 1 520 493**
**FR-A- 2 103 098**
**GB-A- 2 091 745**

(73) Patentinhaber: **BASF Aktiengesellschaft,
Carl-Bosch-Strasse 38, D-6700 Ludwigshafen (DE)**

(72) Erfinder: **Metzger, Werner, Dr., Bergstrasse 12,
D-6717 Hessheim (DE)**
Erfinder: **Bauer, Peter, Erich-Kaestner-Strasse 13,
D-6700 Ludwigshafen (DE)**
Erfinder: **Brandstetter, Franz, Dr., Ritterbueschel 45,
D-6730 Neustadt (DE)**

## Beschreibung

Die Erfindung betrifft Terpolymerisate des Ethylens mit Schmelzindices kleiner als 100 g/10 min, die aus

1) 100 Mol einpolymerisiertem Ethylen

2) 1 bis 5,5 Mol einpolymerisierten $C_1$- bis $C_8$-Alkylestern von $C_3$- bis $C_6$-Alkencarbonsäuren und

3) 1 bis 3,2 Mol einpolymerisierten $C_3$- bis $C_6$-Alkencarbonsäuren bestehen.

Derartige Terpolymerisate des Ethylens sind beispielsweise aus der GB-A-1 394 883 bekannt. Dabei handelt es sich aber nicht um hochmolekulare Produkte. Diese bekannten Terpolymerisate sind deshalb für viele Anwendungsbereiche, in denen eine thermoplastische Verarbeitung erfolgt, nicht anwendbar. Des weiteren sind in der DE-A-2 341 462 Ethylenterpolymerisate, die $C_1$- bis $C_8$-Alkylester von $C_3$- bis $C_6$-Alkencarbonsäuren und $C_3$- bis $C_6$-Alkencarbonsäuren einpolymerisiert enthalten, und in der DE-B-1 720 335 Polymerisate aus Ethylen, tert.-Butylacrylat, $C_3$- bis $C_8$-Alkenen und Acrylsäure beschrieben. Aus der GB-A-2 091 745 sind Terpolymerisate des Ethylens mit den Comonomeren Maleinsäureanhydrid und Alkencarbonsäureester bekannt, wobei die Copolymerisation in einem Mehrzonen-Autoklaven durchgeführt worden ist.

All die bekannten Produkte besitzen eine mehr oder weniger gute Haftneigung zum Metall. Der Nachteil ist dabei aber die hohe Blockneigung der entsprechenden aus den Terpolymerisaten hergestellten Folien.

Der Erfindung lag daher die Aufgabe zugrunde, Ethylen-Alkencarbonsäureester-Alkencarbonsäure-Terpolymerisate mit einer hohen Haftung auf Metall und gleichzeitig niedrigen Blockwirkung der Folien aufzufinden.

Diese Aufgabe wurde erfindungsgemäss dadurch gelöst, dass die eingangs beschriebenen Terpolymerisate bei 23 °C einen G-Modul bestimmt nach ISO/DIS 537, von gleich oder kleiner als 70 N/mm² aufweisen und das Verhältnis von G-Modul zur Summe der Molteile aus Alkylester und Carbonsäure, bezogen auf 100 Mol Ethylen, kleiner als 20 ist und dass die Terpolymerisate in einem Zweizonen-Rohrreaktor hergestellt werden, wobei die Maximaltemperatur in beiden Zonen oberhalb 230 °C liegt.

Die erfindungsgemässen Terpolymerisate des Ethylens haben Schmelzindices von 100 g/10 min, vorzugsweise im Bereich von 1 bis 60 g/10 min, besonders aber im Bereich von 2 bis 20 g/10 min, gemessen nach DIN 5373 bei 190 °C und 2,16 kp.

Die Herstellung der Ethylenterpolymerisate erfolgt im Zweizonen-Rohrreaktor nach herkömmlichen üblichen Hochdruckpolymerisationsverfahren (vgl. Ullmann's Enzyklopädie der Technischen Chemie, 4. Auflage, Bd. 19 (1980), Seiten 169 bis 175, Verlag Chemie GmbH, D-6940 Weinheim), wobei Drücke von 150 bis 5000 bar, vorzugsweise 1500 bis 3000 üblich sind. Bei der Herstellung der erfindungsgemässen Copolymerisate des Ethylens arbeitet man insbesondere bei Drücken von 1600 bis 2800 bar. Die Temperaturen im Polymerisationssystem liegen zwischen 50 und 450 °C, vorzugsweise zwischen 150 und 300 °C. Die erfindungsgemässen Bedingungen im Polymerisationssystem lassen sich apparativ in sogenannten Zweizonen-Rohrreaktoren einstellen. Unter Zweizonen-Rohrreaktoren versteht man rohrförmige Polymerisationsgefässe, deren Längenausdehnung das über 2000-fache, bevorzugt 5000- bis 50 000-fache des Rohrdurchmessers beträgt und in denen zwei Polymerisationszonen bestehen. Wie üblich wird ein Teil der Polymerisationswärme durch Kühlung des Rohrreaktors mit Wasser von aussen abgeführt.

Die Copolymerisation des Ethylens erfolgt in Gegenwart radikalischer Initiatoren. Unter radikalischen Polymerisationsinitiatoren sollen diejenigen Katalysatoren verstanden werden, die auch für die Homopolymerisation des Ethylens unter hohem Druck verwendet werden. Geeignet ist beispielsweise Sauerstoff, zweckmässigerweise in Mengen von 10 bis 200 Mol-ppm, bezogen auf das zu polymerisierende Ethylen. In Betracht kommen ausserdem Peroxide und andere radikalbildende Verbindungen sowie Gemische von Peroxiden, die unterschiedliche Zerfallstemperaturen haben und Hydroperoxide, vor allem aber auch Mischungen aus Sauerstoff und Peroxiden und/oder Hydroperoxiden. Als Beispiele für Peroxide und Hydroperoxide seien genannt: tert.-Butylperpivalat, Di-tert.-butylperoxid, tert.-Butylhydroperoxid, tert.-Butylperbenzoat, Dilauroylperoxid und tert.-Butylperisononanat. Unter radikalischen Polymerisationsinitiatoren sollen auch Verbindungen wie beispielsweise Azo-iso-buttersäure verstanden werden. Man kann auch Mischungen aus Sauerstoff und einem oder mehreren Peroxiden verwenden. Besonders geeignet sind Peroxide wie Di-tert.-butylperoxid, tert.-Butylperpivalat und tert.-Butylperisononanat.

Das Molekulargewicht des anfallenden Terpolymerisats kann durch die üblichen Regler, z.B. Kohlenwasserstoffe wie Propan, Propen, Buten, Hexen usw., Ketone wie Aceton, Methylethylketon oder Aldehyde wie Propionaldehyd auf den gewünschten Wert gebracht werden. Besonders eignet sich hierbei Propionaldehyd, Propen und Buten.

Die Terpolymerisation wird in Abwesenheit eines Lösungsmittels durchgeführt. Die geringen Mengen eines inerten Lösungsmittels, wie Benzol, Mineralöl oder andere inerte Lösungsmittel, in denen die Polymerisationsinitiatoren gelöst werden, können gegenüber den anderen Einsatzstoffen vernachlässigt werden. Wird mit Sauerstoff als Polymerisationsinitiator gearbeitet, entfällt jegliches Lösungsmittel.

Um zu den erfindungsgemässen Terpolymerisaten des Ethylens zu gelangen, arbeitet man in einem Zweizonen-Rohrreaktor, wobei man das Comonomerengemisch mit Ethylen am Anfang des Reaktors und an einer weiteren Stufe des Reaktors einspeist. Die Verweilzeit des Reaktionsgemisches im Zweizonen-Rohrreaktor liegt dabei oberhalb von 20 sec., vorzugsweise im Bereich von 40 bis 80 sec. Beim Zweizonen-Reaktor wird das gesamte Comonomerengemisch mit dem Ethylen am Anfang des Reaktors und an einer weiteren Stelle des Reaktors hinter der Einlassstelle eindosiert. Die Maximaltemperaturen in den beiden Zonen müssen dabei oberhalb von 230 °C liegen; die Verweilzeit des Reaktionsgemisches beträgt dabei in der 1. bzw. 2. Zone mehr als 20 sec.

Unter $C_3$- bis $C_6$-Alkencarbonsäuren werden $\alpha,\beta$-ethylenisch ungesättigte Carbonsäuren mit 3 bis 6 Kohlenstoffatomen verstanden. So kommen in Frage: Acrylsäure, Methacrylsäure, Ethacrylsäure, Crotonsäure, Itaconsäure, Aconitsäure, Maleinsäure bzw. deren Anhydrid, Citraconsäure bzw. deren Anhydrid, Methylhydrogenmaleat und Methylhydrogenfumarat. Bevorzugt sind Acrylsäure und Methacrylsäure. Die erfindungsgemässen Copolymerisate des Ethylens enthalten 1 bis 3,2 Mol, vorzugsweise 1,1 bis 1,8 Mol an carboxylgruppenhaltigen Monomeren auf 100 Mol Ethylen einpolymerisiert.

Als Ester der $C_3$- bis $C_6$-Alkencarbonsäuren kommen Ester von Alkoholen mit 1 bis 8 Kohlenstoffatomen mit den oben aufgeführten Alkencarbonsäuren in Frage. Besonders geeignet sind die Ester der Acrylsäure mit $C_1$- bis $C_8$-Alkoholen. Ganz besonders zeichnet sich der Ester der Acrylsäure mit n-Butanol aus. Es können aber auch Mischungen aus verschiedenen Estern der $C_3$- bis $C_6$-Alkencarbonsäuren verwendet werden. Die erfindungsgemässen Copolymerisate des Ethylens enthalten 1 bis 5, 5 Mol, vorzugsweise 1, 3 bis 2, 8 Mol $C_1$- bis $C_8$-Alkylester der $C_3$- bis $C_6$-Alkencarbonsäuren auf 100 Mol einpolymerisiert.

Erfindungsgemäss sollen die ternären Copolymerisate bei 23 °C einen G-Modul, bestimmt nach ISO/DIS 537, von gleich oder kleiner als 70 $N/mm^2$, bevorzugt im Bereich von 50 bis 60 $N/mm^2$, haben. Unter G-Modul wird der Schubmodul bzw. Torsionsmodul verstanden. Gleichzeitig soll erfindungsgemäss das Verhältnis von G-Modul zur Summe der Molteile, bezogen auf 100 Mol Ethylen, aus einpolymerisiertem Alkylester und einpolymerisierter Carbonsäure kleiner als 20, bevorzugt zwischen 14 und 18, sein.

Es ist ein Vorteil der erfindungsgemässen Terpolymerisate, dass sie sich vor allem als Haftvermittler eignen. Sie besitzen eine hohe Haftung auf Metallen und eine niedrige Blockkraft, d.h. geringes unerwünschtes Haften der Oberflächen zweier aufeinanderliegender Folien oder Schichten.

Die Bestimmung der Blockeigenschaften erfolgt analog der DIN 5336. Hierzu werden die Folien eine Stunde bei 70 °C unter einer Belastung von 1 $N/cm^2$ verblockt und auf einer Zerreissmaschine mit elektronischer Kraftmessung nach Art der Bestimmung der Scherfestigkeit voneinander getrennt. Die als Blockkraft bezeichnete Kraft in Newton, die notwendig ist, um einen 15 mm breiten Streifen der bei 70 °C verblockten Folien zu trennen, wird als Messwert angegeben.

Die Bestimmung der Schälfestigkeit wurde folgendermassen durchgeführt:

Ein gereinigtes und entfettetes 0,5 mm dickes Aluminiumblech der Dimension 16×16 cm wird an einer Seite auf einer Länge von 4 cm mit Aluminiumbronze als Trennschicht bestrichen. Auf das so präparierte Aluminiumblech wird dann die 0,3 mm dicke Folie des Klebers mit gleicher Abmessung wie das Blech gelegt, darauf eine 1 mm dicke Platte an Polyethylen. Das Plattenpaket wird in einer Presse unter einem Druck von 2 kp pro $cm^2$ innerhalb von 3 Minuten bei einer Temperatur von 180 °C miteinander verbunden.

Anschliessend wird die Verbundplatte in 2,0 cm breite Streifen geschnitten. An der mit Aluminiumbronze bestrichenen Seite kann das Polyethylen (1) leicht vom Metall (2) getrennt werden, d.h. eine Haftfestigkeit ist an diesen Stellen nicht messbar. Zur Prüfung der Haftfestigkeit des Verbundes bohrt man in 120 mm Abstand Löcher mit 5 mm Durchmesser in den Streifen.

Mit der Metallseite wird der Streifen über eine Rolle (3) mit 100 mm Durchmesser gebogen. Das Loch des mit Aluminiumbronze bestrichenen Ende des Streifens wird in einem auf der Rolle befestigten Haken (4) eingehängt; in das andere Loch wird ein an einem Grad befestigter Haken (5) eingehängt, der über eine Spannschraube (6) über den Draht straff an der Rolle gezogen wird.

Eine Gabel (7), die die Achse (8) der Rolle führt, wird in eine Klemme (9) einer Zugmaschine eingespannt, das freie Polyethylenende des Streifens in die andere Klemme (10). Beim Auseinanderfahren der Klemmen wird der Verbund aufgeschält. Angegeben wird die Kraft in N/2 cm Streifenbreite (vgl. Figur).

Beispiele

Die Copolymerisation des Ethylens mit den Comonomeren wurde in allen Fällen in einem rohrförmigen Zweizonenreaktor durchgeführt, wobei die Maximaltemperatur in den beiden Zonen oberhalb von 230 °C liegt. Das Ethylen wurde in zwei separaten Gasströmen mit dem Mengenverhältnis 1:1 mit der jeweils angegebenen Sauerstoffmenge und der notwendigen Reglermenge versetzt und bis auf Reaktionsdruck aufkomprimiert. Von den Gassträngen wurde in allen Fällen der eine der Einlassstelle des Reaktors zugeführt und der andere an einer zweiten Gaszufuhrstelle etwa nach 1:3 der gesamten Reaktorlänge, nachdem sich die Reaktion in dem ersten Reaktorteil mit einem Temperaturmaximum ausgebildet hatte und die Temperatur des Gemisches schon wieder am Abklingen war, dem Reaktor zugeführt. Durch diese Massnahme bildeten sich zwei Reaktionszonen in dem rohrförmigen Reaktor.

Der Reaktor hatte in beiden Reaktionszonen ein Längen-/Durchmesserverhältnis von etwa 10 000. Zur Abführung eines Teils der Reaktionswärme wurden die Rohrwände von aussen mit Wasser gekühlt. Bei der Durchführung der in den Beispielen aufgeführten Versuche wurden die zur Polymerisation benötigten Mengen an Alkylester der Alkencarbonsäuren und an Alkencarbonsäuren aufgeteilt.

Das anfallende Polymerisat wurde in bekannter Weise in den dem Reaktor nachgeschalteten Abscheidern von nicht umgesetzten Monomeren abgetrennt.

Beispiele 1 bis 3

Dem oben beschriebenen Reaktor wurde an der Einlassstelle (1. Reaktionszone) ein Gemisch bestehend aus
Beispiel 1: 984
Beispiel 2: 986
Beispiel 3: 984
Gewichtsteilen/Stunde Ethylen,
Beispiel 1: 12
Beispiel 2: 10
Beispiel 3: 12
Gewichtsteilen/Stunde Acrylsäure-n-butylester und
Beispiel 1: 4
Beispiel 2: 4
Beispiel 3: 4
Gewichtsteilen/Stunde Acrylsäure zugeführt. Als Initiator wurde dem Monomerengemisch
Beispiel 1: 21,7
Beispiel 2: 21,7
Beispiel 3: 20,0
Mol-ppm Sauerstoff, bezogen auf Ethylen, zugesetzt.

In der zweiten Reaktionszone wurde dem Reaktor ein Gemisch bestehend aus
Beispiel 1: 961
Beispiel 2: 959
Beispiel 3: 961
Gewichtsteilen/Stunde Ethylen,
Beispiel 1: 29
Beispiel 2: 28
Beispiel 3: 29
Gewichtsteilen/Stunde Acrylsäure-n-butylester,
Beispiel 1: 10
Beispiel 2: 13
Beispiel 3: 10
Gewichtsteile/Stunde Acrylsäure und als Initiator
Beispiel 1: 12,5
Beispiel 2: 12,5
Beispiel 3: 12
Mol-ppm Sauerstoff, bezogen auf Ethylen, zugesetzt. Die Polymerisation wurde bei einem Druck von 2200 bar durchgeführt.

Durch die freiwerdende Reaktionswärme, die nicht über die Reaktorwand an das Kühlmittel abgegeben wurde, erreichte das Reaktionsgemisch eine Temperatur von 300 °C in der 1. Reaktionszone und in der 2. von 270 °C.

Als Molgewichtsregler wurde Propylen (Beispiel 1, 2) bzw. Propionaldehyd (Beispiel 3) eingesetzt. Die Reglermenge wurde so bemessen, dass sich ein Schmelzindex von
Beispiel 1: 7,0
Beispiel 2: 13,0
Beispiel 3: 6,5
g/10 min, gemessen nach DIN 53 735 bei 190 °C und 2,16 kp, einstellte.

Auf diese Weise wurden
Beispiel 1: 438
Beispiel 2: 441
Beispiel 3: 443
Gewichtsteile/Stunde eines Ethylen/Acrylsäure-n-butylester/Acrylsäure-Terpolymerisates erhalten, die an Acrylsäure-n-butylester
Beispiel 1: 2,3
Beispiel 2: 2,1
Beispiel 3: 1,9
und an Acrylsäure
Beispiel 1: 1,3
Beispiel 2: 1,5
Beispiel 3: 1,4
Mol, bezogen auf 100 Mol Ethylen, einpolymerisiert enthalten. Der G-Modul, gemessen bei 23 °C nach ISO/DIS 534, lag bei
Beispiel 1: 54
Beispiel 2: 52
Beispiel 3: 57
$N/mm^2$ und das Verhältnis von G-Modul zu den Molteilen, bezogen auf 100 Mol Ethylen, an Alkylester und Carbonsäure bei
Beispiel 1: 15
Beispiel 2: 14
Beispiel 3: 17

Die Polymerisate besassen eine Blockkraft von
Beispiel 1: 172
Beispiel 2: 182
Beispiel 3: 193
N, gemessen bei 70 °C nach DIN 53 336 und eine Haftung auf Aluminiumblech von
Beispiel 1: 210
Beispiel 2: 200
Beispiel 3: 180
N/2 cm, gemessen nach der oben beschriebenen Methode.

Vergleichsversuche
Vergleichsversuch 1

Eine Mischung von 978 kg/Stunde Ethylen, 6,7 kg/Stunde Acrylsäure, 15,3 kg/Stunde Acrylsäure-n-butylester und 0,38 kg/Stunde Propionaldehyd (Temperatur des Gemisches: 32 °C) wurde kontinuierlich durch einen auf einen Druck von 2300 bar gehaltenen 15 1-Rührautoklaven mit einem Längen-/Durchmesserverhältnis von 2,5 geleitet. Durch die kontinuierliche Zugabe von 42 Mol-ppm tert.-Butylperisononanat/Stunde wurde die Temperatur im Autoklaven bei 220 °C gehalten. Nach Entspannung des Reaktionsgemisches fielen 165 kg/Stunde eines Polymerisates mit einem Gehalt an Acrylsäure-n-butylester von 1,9 Mol, bezogen auf 100 Mol Ethylen und an Acrylsäure von 1,67 Mol, bezogen auf 100 Mol Ethylen, und einem Schmelzindex, gemessen bei 190 °C und 2,16 kg nach DIN 53 735, von 6,5 g/10 min an.

Das Polymerisat besass einen G-Modul von 84 $N/mm^2$, gemessen bei 23 °C nach ISO/DIS 537, eine Blockkraft von 270 N, gemessen bei 70 °C nach DIN 53 336 und eine Haftung auf Aluminiumblech von 110 N/2 cm, gemessen nach der oben beschriebenen Methode. Das Verhältnis von G-Modul zu den Molteilen, bezogen auf 100 Mol Ethylen, an Alkylester und Carbonsäure lag bei 23,5.

## Vergleichsversuch 2

Als Vergleichsversuch 2 diente das Beispiel 22 der DE-B-17 20 355.

Das Polymerisat besass einen G-Modul von 75 $N/mm^2$, gemessen bei +23 °C nach ISO/DIS 537, eine Blockkraft von 240 N, gemessen bei 70 °C nach DIN 53 336, und eine Haftung auf Aluminiumblech von 180 N/2 cm, gemessen nach der oben beschriebenen Methode. Das Verhältnis von G-Modul zu den Molteilen, bezogen auf 100 Mol Ethylen, an Alkylester und Carbonsäure lag bei 20.

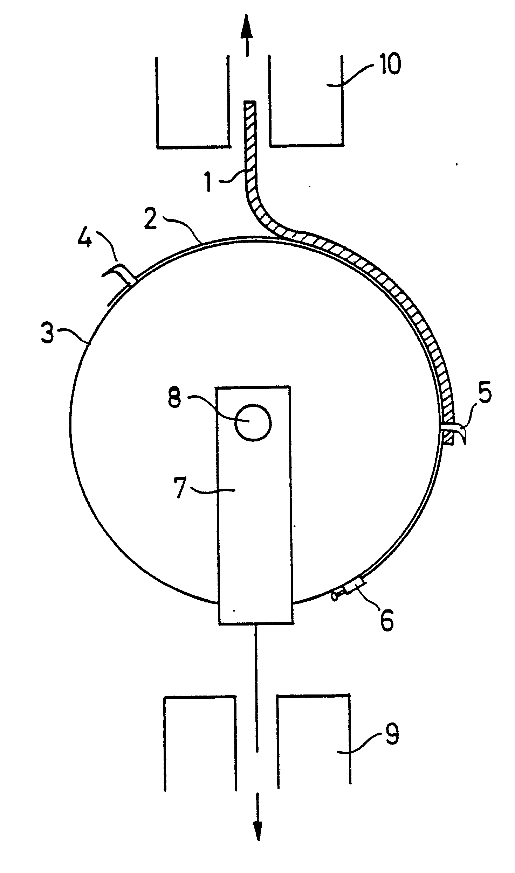

## Patentanspruch

Terpolymerisate des Ethylens mit Schmelzindices von kleiner als 100 g/10 min, die aus

1) 100 Mol einpolymerisiertem Ethylen

2) 1 bis 5,5 Mol einpolymerisierten $C_1$- bis $C_8$-Alkylestern von $C_3$- bis $C_6$- Alkencarbonsäuren und

3) 1 bis 3,2 Mol einpolymerisierter Acrylsäure oder Methacrylsäure bestehen, dadurch gekennzeichnet, dass die Terpolymerisate bei 23 °C einen G-Modul, bestimmt nach ISO/DIS 537, von gleich oder kleiner als 79 $N/mm^2$ aufweisen und das Verhältnis von G-Modul zur Summe der Molteile aus Alkylester und Carbonsäure, bezogen auf 100 Mol Ethylen, kleiner als 20 ist und dass die Terpolymerisate hergestellt werden in einem Zweizonen-Rohrreaktor, wobei die Maximaltemperatur in den beiden Zonen oberhalb von 230 °C liegt.

## Revendication

Terpolymères d'éthylène qui ont des indices de fusion inférieurs à 100 g/10mn, et qui se composent de

a) 100 moles d'éthylène polymérisé,

b) 1 à 5,5 moles d'un ester alkylique en $C_1$-$C_8$ d'un acide alcènecarboxylique en $C_3$-$C_6$ polymérisé, et

c) 1 à 3,2 moles d'acide acrylique ou méthacrylique polymérisé, caractérisés en ce que les terpolymères présentent à 23 °C un module G, selon la norme ISO/DIN 537, égal ou inférieur à 70 $N/mm^2$ et le rapport du module G à la somme des parties molaires d'ester alkylique et d'acide carboxylique, par rapport à 100 moles d'éthylène, est inférieur à 20, et en ce que les terpolymères ont été préparés dans un réacteur tubulaire à deux zones, la température maximale dans la deuxième zone étant supérieure à 230 °C.

## Claim

A terpolymer of ethylene having a melt flow index of less than 100 g/10 min and consisting of

1) 100 moles of ethylene in copolymerized form,

2) from 1 to 5, 5 moles of a $C_1$-$C_8$-alkyl ester of a $C_3$-$C_6$-alkene carboxylic acid in copolymerized form and

3) from 1 to 3, 2 moles of acrylic or methacrylic acid in copolymerized form, which has at 23 °C a torison modulus, determined according to ISO/DIS 537, of equal to or less than 70 $N/mm^2$, in which the ratio of the torsion modulus to the total mole fractions of alkyl ester and carboxylic acid, based on 100 moles of ethylene, is less than 20, and which is prepared in a two-zone tubular reactor where the maximum temperature in the two zones is above 230 °C.

1/1